# EUROPÄISCHE PATENTSCHRIFT

(11) **EP 1 362 656 B1**
(45) Veröffentlichungstag und Bekanntmachung des Hinweises auf die Patenterteilung: **18.01.2006**
(21) Anmeldenummer: 03010341.0
(22) Anmeldetag: 08.05.2003
(51) Int. Cl.: B23D 45/10, B27B 5/075

(54) **Sägevorrichtung zum Aufteilen von plattenförmigen Werkstücken**
Sawing device for cutting of panels
Dispositif de sciage pour couper des panneaux

(30) Priorität: 15.05.2002 DE 10223141
(43) Veröffentlichungstag der Anmeldung: 19.11.2003
(73) Patentinhaber: REICH SPEZIALMASCHINEN GmbH, 72622 Nürtingen (DE)
(72) Erfinder: Hackl, Franz, 4591 Molln (AT)
(74) Vertreter: Hoeger, Stellrecht & Partner Patentanwälte

(56) Entgegenhaltungen:
- EP-A- 0 768 144
- EP-A- 1 074 326
- DE-A- 4 425 008
- US-A- 5 159 869

## Beschreibung

Die Erfindung betrifft eine Sägevorrichtung zur Aufteilung vorzugsweise plattenförmiger Werkstücke, mit einem einen Auflagetisch für die Werkstücke ausbildenden Maschinengestell, an dem ein Transportwagen in einer Bearbeitungsrichtung verfahrbar gehalten ist, wobei am Transportwagen in Bearbeitungsrichtung hintereinander eine Vorritzsäge und eine Trennsäge angeordnet sind mit jeweils einem motorisch antreibbaren Sägeblatt, wobei das Sägeblatt der Vorritzsäge einen kleineren Durchmesser aufweist als das Sägeblatt der Trennsäge.

Derartige Sägevorrichtungen sind aus EP 1 074 326 A, US 5 159 869 A und EP 0 768 144 A bekannt. Sie kommen insbesondere zur Aufteilung von plattenförmigen Holz- oder Kunststoffplatten zum Einsatz. Hierbei werden die Werkstücke auf dem Auflagetisch positioniert, wobei in vielen Fällen eine Niederhaltevorrichtung zum Festlegen der Werkstücke während ihrer Bearbeitung zum Einsatz kommt. Die Niederhaltevorrichtung kann beispielsweise als in vertikaler Richtung anheb- und absenkbarer Druckbalken ausgestaltet sein.

Zur Aufteilung der Werkstücke sind am Transportwagen eine Vorritz- und eine Trennsäge angeordnet, die jeweils ein Sägeblatt umfassen und mittels eines Antriebsaggregats, vorzugsweise eines Elektromotors, motorisch antreibbar sind. Bei der Aufteilung eines Werkstückes gelangen die Vorritz- und die Trennsäge nacheinander mit dem Werkstück in Eingriff. Die Anordnung der Vorritz- und der Trennsäge am Transportwagen bestimmt folglich die Bearbeitungsrichtung, die dem Benutzer der Sägevorrichtung vorgegeben wird.

In der DE 44 25 008 A wird eine Sägevorrichtung beschrieben mit zwei identischen Sägeeinheiten, die wahlweise eine angehobene und eine abgesenkte Stellung einnehmen können und somit in Abhängigkeit von der jeweils vorherrschenden Bearbeitungsrichtung die Funktion einer Vorritz- und einer Trennsäge übernehmen können.

Zur Änderung der Bearbeitungsrichtung wurde bereits vorgeschlagen, den Transportwagen mit den daran angeordneten Sägen um 180° bezogen auf eine vertikal ausgerichtete Drehachse zu drehen. Dies hat den Vorteil, daß die Bauteile der Sägevorrichtung bei einer Änderung der Bearbeitungsrichtung nicht geändert werden müssen. Nachteilig an einer derartigen Vorgehensweise ist es jedoch, daß das Maschinengestell den erforderlichen Bauraum zur Verfügung stellen muß, um den Transportwagen mit den daran angeordneten Sägen in zwei verschiedenen Stellungen anordnen zu können. Außerdem wird mit der Drehung des Transportwagens auch der Zugang zu den Sägeblättern um 180° gedreht. Dies wird von vielen Benutzern als nachteilig empfunden.

Um dem Benutzer der Sägevorrichtung unabhängig von der Bearbeitungsrichtung einen gleichbleibenden Zugang zu den Sägeblättern zu verschaffen, werden deshalb häufig die Transportwägen entsprechend einer gewünschten Bearbeitungsrichtung vorgefertigt. Dies ist allerdings mit einer kostenaufwendigen Materialbevorratung verbunden, da je nach Kundenwunsch bei ansonsten ungeänderter Konstruktion der Sägevorrichtung jeweils entsprechend der gewünschten Bearbeitungsrichtung konstruierte Transportwägen bevorratet werden müssen.

Aufgabe der vorliegenden Erfindung ist es, eine Sägevorrichtung der eingangs genannten Art derart weiterzubilden, daß zur Herstellung der Sägevorrichtung unabhängig von der Bearbeitungsrichtung die gleichen Bauteile verwendet werden können.

Diese Aufgabe wird bei einer Sägevorrichtung der gattungsgemäßen Art erfindungsgemäß dadurch gelöst, daß die Vorritz- und die Trennsäge bezogen auf eine senkrecht zur Bearbeitungsrichtung ausgerichtete Ebene vertauschbar am Transportwagen gehalten sind. Eine derartige Ausgestaltung ermöglicht es, je nach gewünschter Bearbeitungsrichtung die Sägen in unterschiedlicher Reihenfolge am Transportwagen anzuordnen, ohne daß hierbei die Orientierung des Transportwagens relativ zum Maschinengestell verändert werden muß und ohne daß einzelne Bauteile der Sägevorrichtung ersetzt werden müssen. Die Materialbevorratung bei der Herstellung der Sägevorrichtung kann dadurch erheblich verringert werden.

Von besonderem Vorteil ist es, wenn die Vorritz- und die Trennsäge jeweils ein am Transportwagen gehaltenes Antriebsaggregat umfassen, wobei die Vorritz-und die Trennsäge, unter Beibehaltung der Lage der Antriebsaggregate bezogen auf eine quer zur Bearbeitungsrichtung verlaufende Querrichtung, vertauschbar am Transportwagen gehalten sind. Bei einer derartigen Ausführungsform ist das Vertauschen von Vorritz- und Trennsäge zur Erzielung unterschiedlicher Bearbeitungsrichtungen nicht mit einer Veränderung der Lage der Antriebsaggregate quer zur Bearbeitungsrichtung gekoppelt. Es ist folglich nicht erforderlich, daß das Maschinengestell einen ausreichenden Bauraum zur Verfügung stellt, um die Antriebsaggregate in unterschiedlicher Lage anordnen zu können. Da die Vorritz- und die Trennsäge jeweils ein separates Antriebsaggregat umfassen, gibt dies die Möglichkeit, jeweils eine der Sägen einschließlich eines Antriebsaggregates an einem Träger zu halten, der in unterschiedlichen Positionen bezogen auf die Bearbeitungsrichtung mit dem Transportwagen lösbar verbindbar ist.

Günstig ist es, wenn die Antriebsaggregate jeweils seitlich am Transportwagen gehalten sind, vorzugsweise auf der bei der Bedienung der Sägevorrichtung dem Benutzer zugewandten Vorderseite des Transportwagens.

Es kann vorgesehen sein, daß die Sägevorrichtung eine Druckbalkensäge ausbildet mit einem in vertikaler Richtung vom Auflagetisch anhebbaren und auf den Auflagetisch absenkbaren Druckbalken zum Festlegen der Werkstücke während ihrer Aufteilung.

Von Vorteil ist es, wenn die Sägeblätter über Getriebemittel mit den zugeordneten Antriebsaggregaten gekoppelt sind, wobei die Antriebsaggregate auf einer Seite des Transportwagens und die Getriebemittel auf der gegenüberliegenden Seite des Transportwagens gehalten sind.

Als Getriebemittel kommen vorzugsweise Riementriebe zum Einsatz, insbesondere Keil- oder Zahnriementriebe.

Günstig ist es, wenn die Vorritz- und die Trennsäge in vertikaler Richtung verschieblich am Transportwagen gehalten sind. Dies gibt die Möglichkeit, die Sägen einschließlich der Sägeblätter und der Antriebsaggregate beim Verfahren des Transportwagens in Bearbeitungsrichtung in eine obere Stellung zu verschieben, so daß die Sägeblätter mit dem zu bearbeitenden Werkstück in Eingriff gelangen. Hat der Transportwagen eine Endstellung erreicht, so können die Sägen in eine untere Stellung verschoben werden, um anschließend den Transportwagen entgegen der Bearbeitungsrichtung in eine Anfangsstellung zu verfahren, ohne daß die Gefahr besteht, daß die Sägeblätter mit dem Werkstück in Kontakt gelangen.

Bei einer kostengünstig herstellbaren Ausführungsform der erfindungsgemäßen Sägevorrichtung sind die Vorritz- und die Trennsäge jeweils an einem Schlitten angeordnet, wobei die Schlitten vertikal verschieblich und bezogen auf eine senkrecht zur Bearbeitungsrichtung ausgerichtete Ebene vertauschbar am Transportwagen gehalten sind. Die Sägen können folglich jeweils an einem Schlitten angeordnet werden, und anschließend werden die Schlitten am Transportwagen montiert, wobei die Lage der Schlitten entsprechend der gewünschten Bearbeitungsrichtung gewählt werden kann.

Vorzugsweise weisen die Schlitten jeweils eine Schlittenplatte auf, die mittels Führungselemente verschiebbar am Transportwagen gehalten ist. An der Schlittenplatte kann eine Säge gehalten werden, und mehrere Schlittenplatten können in der gewünschten Reihenfolge in Bearbeitungsrichtung hintereinander am Transportwagen montiert werden.

Der Transportwagen umfaßt vorzugsweise Führungsschienen, an denen die Schlitten verschiebbar gehalten sind.

Hierbei ist es günstig, wenn die Schlitten jeweils an einem Führungsschienenpaar gehalten sind.

Zur Erzielung einer besonders kompakten Ausgestaltung des Transportwagens ist es von Vorteil, wenn der Transportwagen drei parallel zueinander ausgerichtete Führungsschienen aufweist, wobei ein erster Schlitten an einem von einer ersten und einer zweiten Führungsschiene gebildeten Führungsschienenpaar verschiebbar gehalten ist, und wobei ein zweiter Schlitten an einem von der zweiten und einer dritten Führungsschiene gebildeten Führungsschienenpaar verschiebbar gehalten ist. Die zweite Führungsschiene dient folglich der Lagerung sowohl des ersten als auch des zweiten Schlittens. Hierbei ist es günstig, wenn die zweite Führungsschiene in Bearbeitungsrichtung mittig am Transportwagen angeordnet ist.

Um das Vertauschen von Vorritz- und Trennsäge besonders einfach zu gestalten, ist es günstig, wenn der erste Schlitten mit gleichbleibender Ausrichtung quer zur Bearbeitungsrichtung sowohl an einem ersten Führungsschienenpaar als auch an einem zweiten Führungsschienenpaar angeordnet werden kann. Das Versetzen des ersten Schlittens beispielsweise von einer in Bearbeitungsrichtung vorderen Position in eine in Bearbeitungsrichtung hintere Position gestaltet sich folglich sehr einfach, denn es ist lediglich erforderlich, den ersten Schlitten aus dem vorderen Führungsschienenpaar auszuheben und bei gleichbleibender Ausrichtung quer zur Bearbeitungsrichtung in das hintere Führungsschienenpaar einzusetzen.

Bei einer vorteilhaften Ausführungsform ist vorgesehen, daß der zweite Schlitten an den Führungsschienen sowohl in einer ersten Ausrichtung als auch in einer bezogen auf die erste Ausrichtung um 180° um eine vertikal ausgerichtete Drehachse gedrehte zweite Ausrichtung angeordnet werden kann. Dies gibt die Möglichkeit, den zweiten Schlitten bei einer Veränderung seiner Läge bezogen auf die Bearbeitungsrichtung um 180° zu drehen, so daß er beispielsweise ausgehend von einer in Bearbeitungsrichtung hinteren Stellung in eine vordere Stellung versetzt werden kann, wobei es hierzu lediglich erforderlich ist, den zweiten Schlitten um 180° zu verdrehen.

Der Transportwagen ist vorzugsweise mittels einer Linearführungsanordnung am Maschinengestell verfahrbar gehalten, denn dies erleichtert die Montage des Transportwagens am Maschinengestell. Soll die Bearbeitungsrichtung der Sägevorrichtung geändert werden, so ist es hierzu lediglich erforderlich, den Transportwagen entlang der Linearführungsanordnung bis zu einer Randstellung zu verfahren, in der er entweder vom Maschinengestell abgenommen werden kann oder aber in der der Austausch von Vorritz- und Trennsäge erfolgen kann.

Als besonders vorteilhaft hat es sich erwiesen, wenn die Linearführungsanordnung zwei Profilschienen aufweist, die bezogen auf die Vertikale auf gleicher Höhe am Maschinengestell festgelegt sind. Dadurch wird die Montage des Transportwagens am Maschinengestell vereinfacht. Außerdem können dadurch die auf die beiden Profilschienen einwirkenden Lagerkräfte gleichmäßiger verteilt werden. Dies wiederum ermöglicht eine besonders präzise Führung des Transportwagens entlang des Maschinengestells, so daß eine hohe Genauigkeit bei der Aufteilung der Werkstücke erzielt werden kann.

Bei einer besonders bevorzugten Ausführungsform der erfindungsgemäßen Sägevorrichtung sind die Profilschienen jeweils an einem Hohlprofil des Maschinengestells festgelegt, wobei eine horizontal ausgerichtete Oberseite des Hohlprofils eine Teilbereich des Auflagetisches ausbildet. Die Steifigkeit des Maschinengestells kann durch den Einsatz der jeweils einen Teilbereich des Auflagetisches ausbildenden Hohlprofile erheblich gesteigert werden. Die Festlegung der Profilschienen an den Hohlprofilen ermöglicht es, den Abstand zwischen dem Auflagetisch und der Lagerung des Transportwagens gering zu halten. Damit ergeben sich auch verhältnismäßig geringe Abstände zwischen der Lagerung des Transportwagens und der Lagerung der in Höhe des Auflagetisches positionierbaren Sägeblätter. Dies hat den Vorteil, daß fertigungstechnische Lagerungstoleranzen nur einen geringen Einfluß auf die Genauigkeit der Aufteilung der Werkstücke haben.

Als besonders vorteilhaft hat es sich herausgestellt, wenn die Profilschienen an einer parallel zur Oberseite ausgerichteten Unterseite des jeweiligen Hohlprofils festgelegt sind. Dies ermöglicht eine hängende Anordnung des Transportwagens, der mittels Gleitschuhe in die an der Unterseite der Hohlprofile festgelegten Profilschienen eingehängt werden kann.

Die nachfolgende Beschreibung einer bevorzugten Ausführungsform der Erfindung dient im Zusammenhang mit der Zeichnung der näheren Erläuterung. Es zeigen:

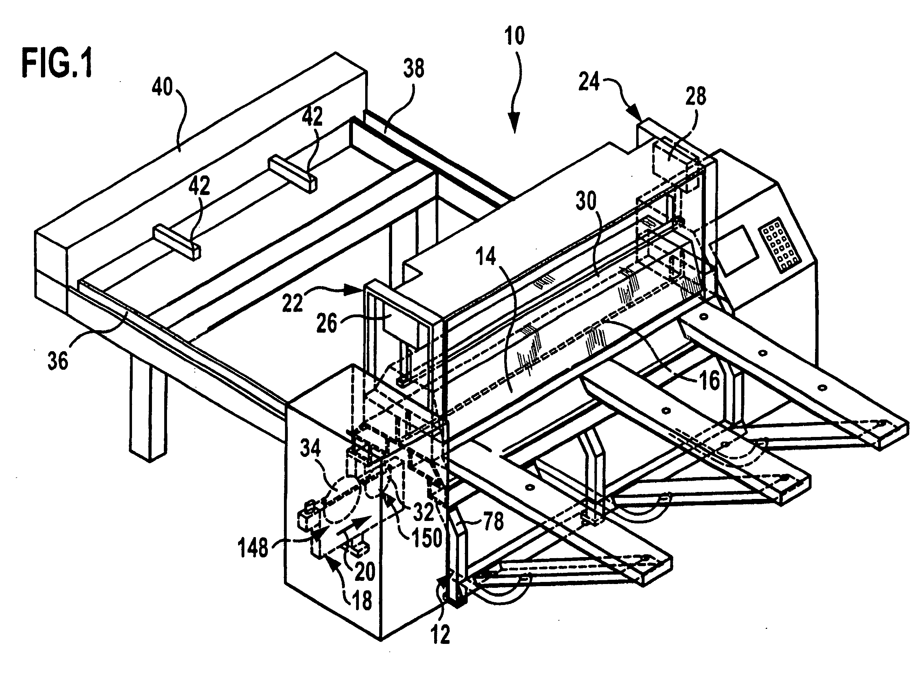

- Figur 1:: eine schaubildliche Darstellung einer erfindungsgemäßen Sägevorrichtung;
- Figur 2:: eine Teilschnittansicht der Sägevorrichtung;
- Figur 3:: eine Seitenansicht eines Transportwagens der Sägevorrichtung mit einer Vorritz- und einer Trennsäge;
- Figur 4:: eine schaubildliche Darstellung des Transportwagens ohne Vorritz- und Trennsäge; und
- Figur 5:: eine Seitenansicht des Transportwagens gemäß Figur 3, wobei die Vorritz- und die Trennsäge in ihrer Reihenfolge vertauscht wurden.

In der Zeichnung ist eine erfindungsgemäße Sägevorrichtung am Beispiel einer insgesamt mit dem Bezugszeichen 10 belegten Druckbalkensäge schematisch dargestellt. Diese umfaßt ein Maschinengestell 12, das einen Auflagetisch 14 ausbildet mit einem Sägespalt 16. Unterhalb des Sägespalts ist ein Transportwagen 18 in Bearbeitungsrichtung 20 linear verfahrbar am Maschinengestell 12 gehalten.

An einander gegenüberliegenden Stirnseiten trägt das Maschinengestell 12 jeweils einen Druckbalkenturm 22, 24, der eine Führungsanordnung 26 bzw. 28 aufnimmt. Mittels der Führungsanordnungen 26, 28 ist an den Druckbalkentürmen 22, 24 eine Niederhaltevorrichtung in Form eines Druckbalkens 30 in zur Tischebene des Auflagetisches 14 senkrechter Richtung verstellbar gehalten. Der Druckbalken 30 weist in üblicher Weise ein ungefähr C-förmiges Profil auf mit einer dem Sägespalt 16 zugewandten schlitzförmigen Öffnung, in die bei der Bearbeitung eines Werkstücks, nämlich der Vornahme eines Sägeschnittes, verstellbar am Transportwagen 18 gehaltene Sägeblätter 32, 34 eintreten können.

Die Führungsanordnungen 26 und 28 der beiden Druckbalkentürme 22, 24 umfassen in üblicher und deshalb in der Zeichnung nicht dargestellter Weise druckmittelbeaufschlagbare Zylinder, mit denen der Druckbalken 30 angehoben und abgesenkt werden kann.

Die Druckbalkensäge 10 weist zwei parallel zueinander und senkrecht zur Bearbeitungsrichtung 20 ausgerichtete Führungsschienen 36, 38 auf, an denen eine Vorschubvorrichtung in Form eines Transportschlittens 40 verschiebbar gehalten ist, wobei der Transportschlitten 40 mittels eines an sich bekannten und deshalb in der Zeichnung nicht dargestellten Antriebes entlang der Führungsschienen 36, 38 definiert hin- und herbewegbar ist.

Am Transportschlitten 40 sind mehrere an sich bekannte und deshalb in der Zeichnung nur schematisch dargestellte Greifzangen 42 gehalten, mit denen ein plattenförmiges Werkstück (nicht dargestellt), vorzugsweise eine Holz-oder Kunststoffplatte, erfaßt und zur Bearbeitung in Richtung auf den Sägespalt 16 verschoben werden kann.

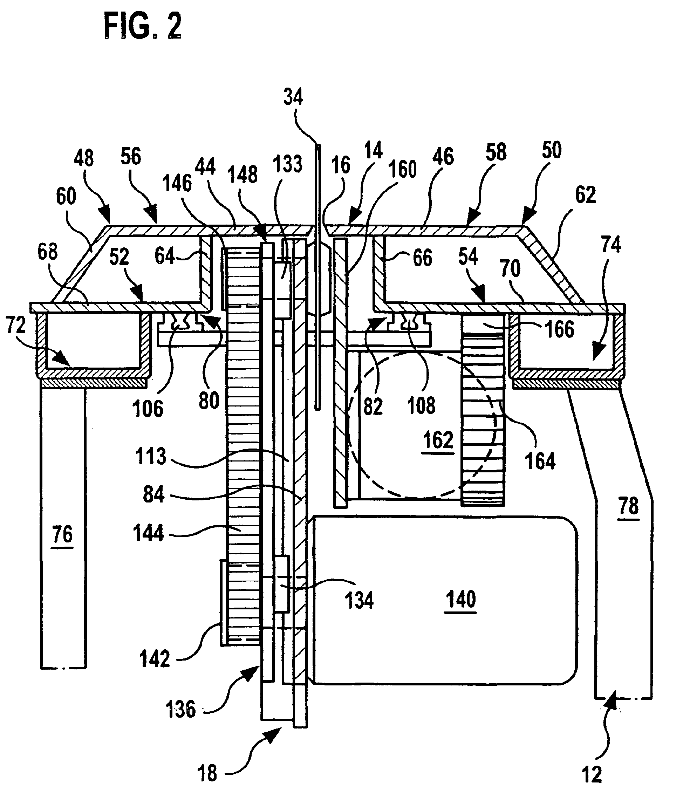

Wie insbesondere aus Figur 2 deutlich wird, wird der Auflagetisch 14 von den längeren Schenkeln 44, 46 zweier L-förmig gebogener Profilteile 48 bzw. 50 gebildet, die in Kombination mit jeweils einem weiteren, ebenfalls L-förmig gebildeten Profilteil 52 bzw. 54 jeweils ein Hohlprofil 56 bzw. 58 ausbilden. Während die längeren Schenkel 44 bzw. 46 der L-förmig gebildeten Profilteile 48 und 50 horizontal ausgerichtet sind, sind die zugeordneten kürzeren Schenkel 60 bzw. 62 jeweils unter einem Winkel von etwa 60° zur Horizontalen schräg nach außen in die dem Sägespalt 16 abgewandte Richtung gerichtet. Im Gegensatz zu den schräg verlaufenden Schenkel 60 und 62 der Profilteile 48 bzw. 50 sind die kurzen Schenkel 64 bzw. 66 der L-förmig gebogenen Profilteile 52 und 54 senkrecht zu deren längeren Schenkeln 68 bzw. 70 ausgerichtet und verlaufen parallel zueinander. Die längeren Schenkel 68 und 70 wiederum sind parallel zu den den Auflagetisch 14 ausbildenden längeren Schenkeln 44 bzw. 46 ausgerichtet.

Die Hohlprofile 56 und 58 sind jeweils von einem U-Profil 72 bzw. 74 abgestützt, das von einem Stützfuß 76 bzw. 78 des Maschinengestells 12 getragen wird.

An der Unterseite der Hohlprofile 56 und 58 ist seitlich der U-Profile 72, 74 jeweils eine Profilschienenführung 80, 82 gehalten, die der Lagerung des linear verfahrbaren Transportwagens 18 dient.

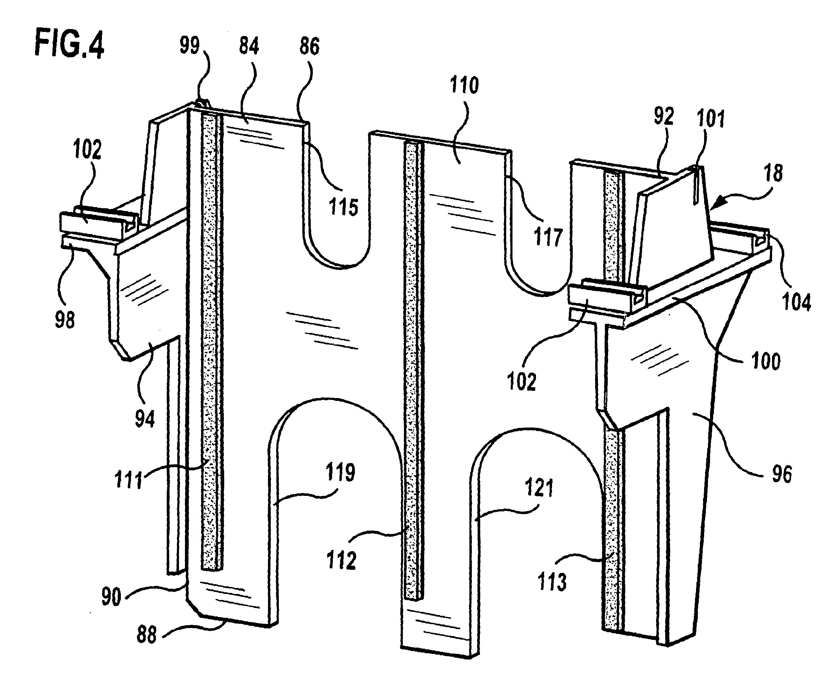

Der Transportwagen 18 ist in Figur 4 schematisch dargestellt. Er umfaßt eine vertikal ausgerichtete Tragplatte 84, die im wesentlichen rechteckförmig ausgestaltet ist und parallel zur Bearbeitungsrichtung 20 verlaufende Ober- und Unterkanten 86 bzw. 88 aufweist sowie vordere und hintere Querkanten 90, 92. Im Bereich der Querkanten 90 und 92 ist jeweils eine Stirnplatte 94 bzw. 96 an die Tragplatte 84 angeschweißt. An den Stirnplatten 94, 96 ist jeweils eine horizontal ausgerichtete Stützplatte 98 bzw. 100 festgelegt, die auf ihrer der Oberkante 86 zugewandten Oberseite jeweils zwei Gleitschuhe 102, 104 trägt. Die Gleitschuhe 102 und 104 stehen jeweils mit einer zugeordneten Profilschiene 106 bzw. 108 der Profilschienenführung 80 bzw. 82 in Eingriff, so daß der Transportwagen 18 mittels der Gleitschuhe 102, 104 und der Profilschienen 106, 108 entlang des Auflagetisches 14 verfahren werden kann.

In Höhe der Oberkante 86 der Tragplatte weisen die Stirnplatten 94, 96 jeweils eine schlitzförmige Öffnung 99 bzw. 101 auf. In die Öffnungen 99, 101 ist eine in Figur 2 dargestellte Halteplatte 160 eingehängt, die zum Fahrantrieb des Transportwagens einen Elektromotor 162 trägt. Dieser treibt ein Ritzel 164 an, das mit einer seitlich neben der Profilschiene 108 an der Unterseite des Hohlprofils 58 gehaltenen Zahnstange 166 kämmt. Mittels des Elektromotors 162 kann der Transportwagen 18 in definierter Weise entlang des Sägespaltes 16 verfahren werden.

Die Tragplatte 84 des Transportwagens 18 trägt auf ihrer dem Transportschlitten 40 zugewandte Rückseite 110 drei parallel zueinander ausgerichtete und gleichmäßig beabstandete Führungsschienen 111, 112 und 113, die in üblicher und deshalb in der Zeichnung nur schematisch dargestellter Weise als Profilschienen ausgestaltet sind. In den Bereichen zwischen zwei einander benachbarten Profilschienen 111 und 112 bzw. 112 und 113 weist die Tragplatte 84 jeweils eine in die Oberkante 86 einmündende obere Ausnehmung 115 bzw. 117 und eine in die Unterkante 88 einmündende untere Ausnehmung 119 bzw. 121 auf.

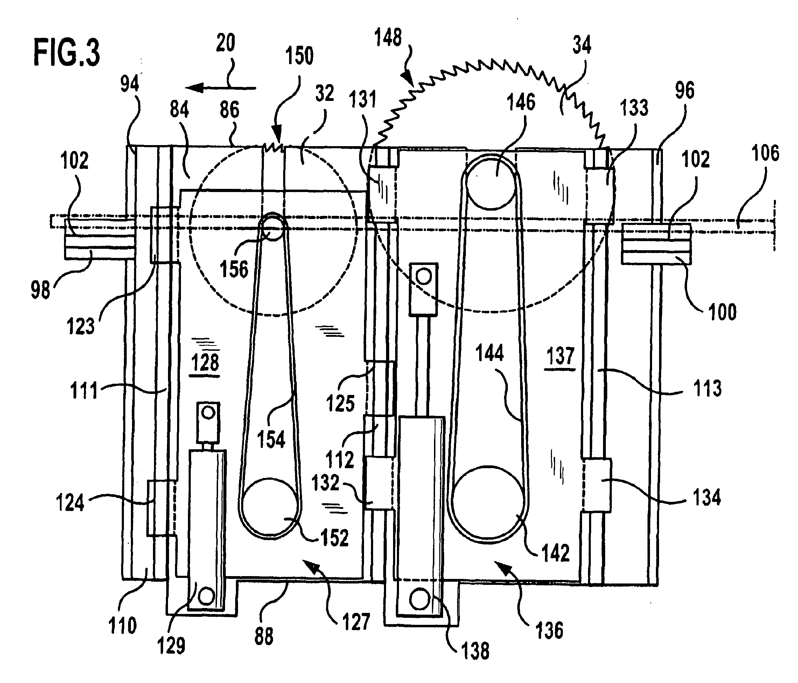

Wie insbesondere aus Figur 3 deutlich wird, ist an den Führungsschienen 111 und 112 mittels Laufschuhe 123, 124 und 125 ein erster Schlitten 127 in vertikaler Richtung verschiebbar gehalten, wobei der erste Schlitten 127 eine Schlittenplatte 128 aufweist, die mittels eines druckluftbeaufschlagbaren Kolben-Zylinderaggregats 129 verschoben werden kann. Die Laufschuhe 123 und 124 sind an der Schlittenplatte 128 an einem oberen bzw. unteren Endbereich angeordnet, während der Laufschuh 125, der die Führungsschiene 112 umgreift, in vertikaler Richtung mittig angeordnet ist.

An den Führungsschienen 112 und 113 ist mittels Laufschuhe 131, 132, 133 und 134 ein zweiter Schlitten 136 in vertikaler Richtung verschiebbar gehalten. Der zweite Schlitten 136 umfaßt eine Schlittenplatte 137, die mittels druckluftbeaufschlagbaren Kolben-Zylinderaggregats 138 verschoben werden kann. Die Laufschuhe 131 und 133 sind der Oberkante 86 der Tragplatte 84 benachbart an der Schüttenplatte 137 angeordnet, während die Laufschuhe 132 und 134 der Unterkante 88 benachbart angeordnet sind.

Am zweiten Schlitten 136 ist seitlich ein Antriebsaggregat in Form eines elektrischen Antriebsmotors 140 gehalten, der die Ausnehmung 121 der Tragplatte 84 durchgreift. Die Motorwelle des Antriebsmotors 140 trägt auf der-Rückseite 110 der Tragplatte 84 ein Antriebsrad 142, das über einen Zahnriemen 144 mit einem Zahnrad 146 gekoppelt ist, das über eine die Ausnehmung 117 durchgreifende Antriebswelle drehfest mit dem Sägeblatt 34 einer Trennsäge 148 verbunden ist. Die Trennsäge 148 bildet in Kombination mit dem elektrischen Antriebsmotor 140 sowie den Zahn- und Antriebsrädern 146, 142 und dem Zahnriemen 144 eine erste Bearbeitungseinheit zur Aufteilung eines plattenförmigen Werkstücks.

Am ersten Schlitten 127 ist seitlich ebenfalls ein elektrischer Antriebsmotor gehalten, der dem Antriebsmotor 140 entspricht und die Ausnehmung 119 durchgreift (in der Zeichnung nicht dargestellt). Mittels eines Antriebsrades 152 und eines Zahnriemens 154 ist der Antriebsmotor mit einem Zahnrad 156 verbunden, das in üblicher Weise über eine die Ausnehmung 115 durchgreifende Antriebswelle mit dem Sägeblatt 32 einer Vorritzsäge 150 gekoppelt ist. Die Vorritzsäge 150 bildet in Kombination mit dem zugeordneten Antriebsmotor sowie den Zahn- und Antriebsrädern 146, 142 und dem Zahnriemen 144 eine zweite Bearbeitungseinheit zur Aufteilung eines plattenförmigen Werkstückes.

Zur Aufteilung des Werkstückes ist es erforderlich, daß zunächst das Sägeblatt 32 der Vorritzsäge 150 mit dem Werkstück in Eingriff gelangt und daß sich daran die Aufteilung des Werkstücks mittels der Trennsäge 148 anschließt. Dies hat zur Folge, daß die Bearbeitung des Werkstücks nur in Bearbeitungsrichtung 20 erfolgen kann, nicht jedoch in der entgegengesetzten Richtung.

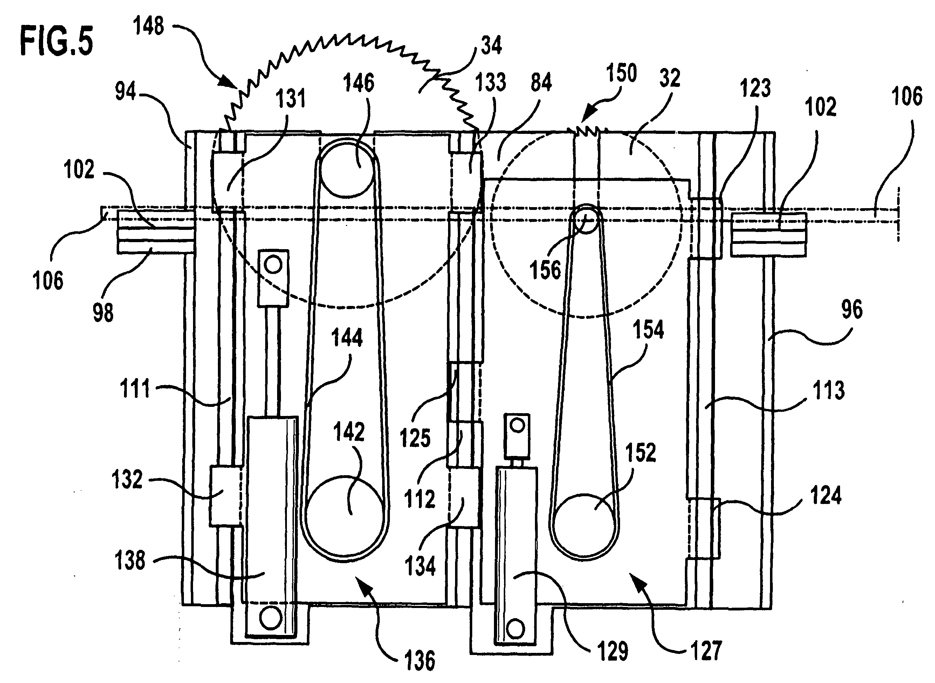

Soll jedoch die Bearbeitungsrichtung geändert werden, so ist es hierzu lediglich erforderlich, die ersten und zweiten Schlitten 127, 136 zu vertauschen, während die Orientierung des Transportwagens 18 sowie die Orientierung der Antriebsmotoren 140 beibehalten werden können. Zum Vertauschen muß der zweite Schlitten 136 lediglich aus seiner in Figur 3 rechts dargestellten Stellung, bei der er an den Führungsschienen 112 und 113 gelagert ist, in seine in Figur 5 dargestellte linke Stellung versetzt werden, so daß er an den Führungsschienen 111 und 112 gehalten ist.

Das Versetzen des ersten Schlittens 127 erfolgt dergestalt, daß zunächst die an ihm gehaltene Vorritzsäge 150 demontiert wird. Anschließend wird der erste Schlitten 127 um eine vertikal ausgerichtete Drehachse um 180° gedreht, so daß er an die Führungsschienen 112 und 113 angeordnet werden kann. Der erste Schlitten 127 ist hierzu spiegelsymmetrisch ausgestaltet, das heißt die Laufschuhe 123, 124 und 125 weisen sowohl auf ihrer der Tragplatte 84 zugewandten Unterseite als auch ihrer der Tragplatte 84 abgewandten Oberseite Führungsnuten auf, mit denen sie mit den Führungsschienen 111, 112 und 113 in Eingriff gelangen können.

Aus dem Voranstehenden wird deutlich, daß die Bearbeitungsrichtung 20 der Druckbalkensäge 10 auf einfache Weise geändert werden kann, indem die ersten und zweiten Schlitten 127, 136 vertauscht werden. Die Lage der Antriebsmotoren 140 sowie der Zugang zu den Sägeblättern 32, 34 wird hierbei bezüglich der quer zur Bearbeitungsrichtung 20 verlaufenden Querrichtung nicht verändert, das heißt die Antriebsmotoren 140 weisen jeweils zu der dem Transportschlitten 40 abgewandten Vorderseite der Druckbalkensäge 10 und die Getriebemittel in Form der Antriebsräder 142, 152 sowie der Zahnriemen 144, 154 und der Zahnräder 146, 156 sind unabhängig von der Bearbeitungsrichtung der Druckbalkensäge 10 jeweils auf der dem Transportschlitten 40 zugewandten Rückseite des Transportwagens 18 angeordnet.

## Patentansprüche

1. Sägevorrichtung zur Aufteilung vorzugsweise plattenförmiger Werkstükke, mit einem einen Auflagetisch (14) für die Werkstücke ausbildenden Maschinengestell (12), an dem ein Transportwagen (18) in einer Bearbeitungsrichtung (20) verfahrbar gehalten ist, wobei am Transportwagen (18) in Bearbeitungsrichtung (20) hintereinander eine Vorritzsäge (150) und eine Trennsäge (148) angeordnet sind mit jeweils einem motorisch antreibbaren Sägeblatt (32, 34), wobei das Sägeblatt (32) der Vorritzsäge (150) einen kleineren Durchmesser aufweist als das Sägeblatt der Trennsäge (148), **dadurch gekennzeichnet, daß** die Vorritz-und die Trennsäge (150, 148) bezogen auf eine senkrecht zur Bearbeitungsrichtung (20) ausgerichtete Ebene vertauschbar am Transportwagen (18) gehalten sind.

2. Sägevorrichtung nach Anspruch 1, **dadurch gekennzeichnet, daß** die Vorritz- und die Trennsäge (150, 148) jeweils ein am Transportwagen (18) gehaltenes Antriebsaggregat 140) umfassen, wobei die Vorritz- und die Trennsäge (150, 148), unter Beibehaltung der Lage der Antriebsaggregate (140) bezogen auf die quer zur Bearbeitungsrichtung verlaufende Querrichtung, vertauschbar am Transportwagen (18) gehalten sind.

3. Sägevorrichtung nach Anspruch 2, **dadurch gekennzeichnet, daß** die Sägeblätter (32, 34) über Getriebemittel (152, 154, 156, 142, 144, 146) mit den zugeordneten Antriebsaggregaten (140) gekoppelt sind, wobei die Antriebsaggregate (140) auf einer Seite des Transportwagens (18) und die Getriebemittel (152, 154, 156, 142, 144, 146) auf der gegenüberliegenden Seite (110) des Transportwagens (18) gehalten sind.

4. Sägevorrichtung nach Anspruch 3, **dadurch gekennzeichnet, daß** die Sägeblätter (32, 34) über einen Riementrieb (154, 144) mit den zugeordneten Antriebsaggregaten (140) gekoppelt sind.

5. Sägevorrichtung nach einem der voranstehenden Ansprüche, **dadurch gekennzeichnet, daß** die Vorritz- und die Trennsäge (150, 148) in vertikaler Richtung verschieblich am Transportwagen (18) gehalten sind.

6. Sägevorrichtung nach einem der voranstehenden Ansprüche, **dadurch gekennzeichnet, daß** die Vorritz- und die Trennsäge (150, 148) jeweils an einem Schlitten (127, 136) angeordnet sind, wobei die Schlitten (127, 136) vertikal verschieblich und bezogen auf eine senkrecht zur Bearbeitungsrichtung (20) ausgerichtete Ebene vertauschbar am Transportwagen (18) gehalten sind.

7. Sägevorrichtung nach Anspruch 6, **dadurch gekennzeichnet, daß** die Schlitten (127, 136) jeweils eine Schlittenplatte (128, 137) aufweisen, die mittels Führungselemente (123, 124, 125, 131, 132, 133, 134) verschiebbar am Transportwagen (18) gehalten sind.

8. Sägevorrichtung nach Anspruch 6 oder 7, **dadurch gekennzeichnet, daß** der Transportwagen (18) Führungsschienen (111, 112, 113) aufweist, an denen die Schlitten (127, 136) verschiebbar gehalten sind.

9. Sägevorrichtung nach Anspruch 8, **dadurch gekennzeichnet, daß** die Schlitten (127, 136) jeweils an einem Führungsschienenpaar (111, 112; 112, 113) gehalten sind.

10. Sägevorrichtung nach Anspruch 9, **dadurch gekennzeichnet, daß** der Transportwagen (18) drei parallel zueinander ausgerichtete Führungsschienen (111, 112, 113) aufweist, wobei ein erster Schlitten (127) an einem von einer ersten und einer zweiten Führungsschiene (111, 112) gebildeten Führungsschienenpaar verschiebbar gehalten ist, und wobei ein zweiter Schlitten (136) an einem von der zweiten und einer dritten Führungsschiene (112, 113) gebildeten Führungsschienenpaar verschiebbar gehalten ist.

11. Sägevorrichtung nach Anspruch 9 oder 10, **dadurch gekennzeichnet, daß** der erste Schlitten (127) bei gleichbleibender Ausrichtung quer zur Bearbeitungsrichtung (20) sowohl an einem ersten Führungsschienenpaar (111, 112) als auch an einem zweiten Führungsschienenpaar (112, 113) anordnenbar ist.

12. Sägevorrichtung nach Anspruch 9, 10 oder 11, **dadurch gekennzeichnet, daß** der zweite Schlitten (136) an den Führungsschienen (111, 112, 113) sowohl in einer ersten Ausrichtung als auch in einer bezogen auf die erste Ausrichtung um 180° um eine vertikale Drehachse gedrehten zweiten Ausrichtung anordnenbar ist.

13. Sägevorrichtung nach einem der voranstehenden Ansprüche, **dadurch gekennzeichnet, daß** der Transportwagen (18) mittels einer Linearführungsanordnung (80, 82) am Maschinengestell (12) verfahrbar gehalten ist, wobei die Linearführungsanordnung (80, 82) zwei Profilschienen (106, 108) aufweist, die bezogen auf die Vertikale auf gleicher Höhe am Maschinengestell (12) festgelegt sind.

14. Sägevorrichtung nach Anspruch 13, **dadurch gekennzeichnet, daß** die Profilschienen (106, 108) jeweils an einem Hohlprofil (56, 58) des Maschinengestells (12) festgelegt sind, wobei eine horizontal ausgerichtete Oberseite der Hohlprofile (56, 58) zumindest einen Teilbereich des Auflagetisches (14) ausbildet.

15. Sägevorrichtung nach Anspruch 14, **dadurch gekennzeichnet, daß** die Profilschienen (106, 108) an einer parallel zur Oberseite ausgerichteten Unterseite des Hohlprofils (56, 58) festgelegt sind.

## Claims

1. Sawing device for dividing preferably plate-shaped workpieces, with a machine frame (12) which forms a support table (14) for the workpieces and at which a transport carriage (18) is held such that it can travel in a working direction (20), wherein a preslitting saw (150) and a cut-off saw (148) with a respective saw blade (32, 34), which can be motor-driven, are disposed one behind the other in the working direction (20) at the transport carriage (18), wherein the saw blade (32) of the preslitting saw (150) has a smaller diameter than the saw blade of the cut-off saw (148), **characterised in that** the preslitting and the cut-off saws (150, 148) are held at the transport carriage (18) such that they can be interchanged relative to a plane which is oriented perpendicularly to the working direction (20).

2. Sawing device according to Claim 1, **characterised in that** the preslitting and the cut-off saws (150, 148) in each case comprise a drive unit (140) which is held at the transport carriage (18), wherein the preslitting and the cut-off saws (150, 148) are held at the transport carriage (18) such that they can be interchanged, while maintaining the position of the drive units (140)relative to the transverse direction extending transversely to the working direction.

3. Sawing device according to Claim 2, **characterised in that** the saw blades (32, 34) are coupled via transmission means (152, 154, 156, 142, 144, 146) to the associated drive units (140), wherein the drive units (140) are held on one side of the transport carriage (18) and the transmission means (152, 154, 156, 142, 144, 146) are held on the opposite side (110) of the transport carriage (18).

4. Sawing device according to Claim 3, **characterised in that** the saw blades (32, 34) are coupled via a belt drive (154, 144) to the associated drive units (140).

5. Sawing device according to any one of the preceding Claims, **characterised in that** the preslitting and the cut-off saws (150, 148) are held at the transport carriage (18) such that they can be displaced in the vertical direction.

6. Sawing device according to any one of the preceding Claims, **characterised in that** the preslitting and the cut-off saws (150, 148) are in each case disposed at a carriage (127, 136), wherein the carriages (127, 136) are held at the transport carriage (18) such that they can be vertically displaced and interchanged relative to a plane which is oriented perpendicularly to the working direction (20).

7. Sawing device according to Claim 6, **characterised in that** the carriages (127, 136) in each case comprise a carriage plate (128, 137), which plates are held at the transport carriage (18) by means of guide elements (123, 124, 125, 131, 132, 133, 134) such that they can be displaced.

8. Sawing device according to Claim 6 or 7, **characterised in that** the transport carriage (18) comprises guide rails (111, 112, 113) at which the carriages (127, 136) are held such that they can be displaced.

9. Sawing device according to Claim 8, **characterised in that** the carriages (127, 136) are in each case held at a guide rail pair (111, 112; 112, 113).

10. Sawing device according to Claim 9, **characterised in that** the transport carriage (18) comprises three guide rails (111, 112, 113) which are oriented parallel to one another, wherein a first carriage (127) is held such that it can be displaced at a guide rail pair formed by a first and a second guide rail (111, 112), and wherein a second carriage (136) is held such that it can be displaced at a guide rail pair formed by the second and a third guide rail (112, 113).

11. Sawing device according to Claim 9 or 10, **characterised in that** the first carriage (127) can be disposed both at a first guide rail pair (111, 112) and at a second guide rail pair (112, 113) with a constant orientation transversely to the working direction (20).

12. Sawing device according to Claim 9, 10 or 11, **characterised in that** the second carriage (136) can be disposed at the guide rails (111, 112, 113) both in a first orientation and in a second orientation which is turned through 180° about a vertical axis of rotation relative to the first orientation.

13. Sawing device according to any one of the preceding Claims, **characterised in that** the transport carriage (18) is held at the machine frame (12) such that it can travel by means of a linear guide arrangement (80, 82), wherein the linear guide arrangement (80, 82) comprises two profiled rails (106, 108) which are fixed to the machine frame (12) at the same height relative to the vertical.

14. Sawing device according to Claim 13, **characterised in that** the profiled rails (106, 108) are in each case fixed to a hollow section (56, 58) of the machine frame (12), wherein a horizontally oriented top side of the hollow sections (56, 58) forms at least a partial region of the support table (14).

15. Sawing device according to Claim 14, **characterised in that** the profiled rails (106, 108) are fixed to an underside of the hollow section (56, 58) which is oriented parallel to the top side.

## Revendications

1. Dispositif de sciage destiné à séparer des pièces se présentant avantageusement sous la forme de plaques, lequel dispositif de sciage comporte un bâti de machine qui forme une table de support (14) pour les pièces et sur lequel un chariot de transport (18) est supporté de façon déplaçable dans une direction de travail (20), une scie de prérainurage (150) et une scie de découpage (148) étant disposées l'une derrière l'autre, par référence une direction de travail (20), sur le chariot de transport (18), chaque scie comportant une lame de scie (32, 34) entraînée par un moteur, la lame de scie (32) de la scie de prérainurage (150) ayant un diamètre inférieur à celui de la lame de scie de découpage (148), **caractérisé en ce que** les scies de prérainurage et de découpage (150, 148) sont supportées par le chariot de transport (18) de façon permutable par rapport à un plan orienté perpendiculairement à la direction de travail (20).

2. Dispositif de sciage selon la revendication 1, **caractérisé en ce que** les scies de prérainurage et de découpage (150, 148) comportent chacune une unité d'entraînement (140) supportée par le chariot de transport (18), les scies de prérainurage et de découpage (150, 148) étant maintenues sur le chariot de transport (18) de manière permutable en conservant la position des unités d'entraînement (140) par rapport à une direction transversale s'étendant transversalement à la direction de travail.

3. Dispositif de sciage selon la revendication 2, **caractérisé en ce que** les lames de scie (32, 34) sont couplées aux unités d'entraînement associées (140) par des moyens de transmission (152, 154, 156, 142, 144,146), les unités d'entraînement (140) étant supportées d'un côté du chariot de transport (18) et les moyens de transmission (152, 154, 156, 142, 144, 146) étant supportés du côté opposé (110) du chariot de transport (18).

4. Dispositif de sciage selon la revendication 3, **caractérisé en ce que** les lames de scie (32, 34) sont couplées aux unités d'entraînement associées (140) par un entraînement par courroie (154, 144).

5. Dispositif de sciage selon l'une des revendications précédentes, **caractérisé en ce que** les scies de prérainurage et de découpage (150, 148) sont supportées par le chariot de transport (18) de façon déplaçable dans une direction verticale.

6. Dispositif de sciage selon l'une des revendications précédentes, **caractérisé en ce que** les scies de prérainurage et de découpage (150, 148) sont disposées chacune sur un chariot (127, 136), les chariots (127, 136) étant supportés par le chariot de transport (18) de façon déplaçable verticalement et permutable par rapport à un plan orienté perpendiculairement à la direction de travail (20).

7. Dispositif de sciage selon la revendication 6, **caractérisé en ce que** les chariots (127, 136) comportent chacun une plaque de chariot (128, 137), lesdites plaques de chariot étant supportées par le chariot de transport (18) de façon déplaçable au moyen d'éléments de guidage (123, 124, 125, 131, 132, 133, 134).

8. Dispositif de sciage selon la revendication 6 ou 7, **caractérisé en ce que** le chariot de transport (18) comporte des glissières de guidage (111, 112, 113) permettant de supporter de façon déplaçable les chariots (127, 136).

9. Dispositif de sciage selon la revendication 8, **caractérisé en ce que** les chariots (127, 136) sont supportés chacun par une paire de glissières de guidage (111, 112 ; 112, 113).

10. Dispositif de sciage selon la revendication 9, **caractérisé en ce que** le chariot de transport (18) comporte trois glissières de guidage (111, 112, 113) orientées parallèlement l'une à l'autre, un premier chariot (127) étant supporté de façon déplaçable par une paire de glissières de guidage formée par une première et une deuxième glissières de guidage (111, 112), et un deuxième chariot (136) étant supporté de façon déplaçable par une paire de glissières de guidage formée par la deuxième et une troisième glissières de guidage (112, 113).

11. Dispositif de sciage selon la revendication 9 ou 10, **caractérisé en ce que** le premier chariot (127) peut être disposé, avec une orientation constante transversale à la direction de travail (20), aussi bien sur une première paire de glissières de guidage (111, 112) que sur une deuxième paire de glissières de guidage (112, 113).

12. Dispositif de sciage selon la revendication 9, 10 ou 11, **caractérisé en ce que** le deuxième chariot (136) peut être disposé sur les glissières de guidage (111, 112, 113) aussi bien dans une première orientation que dans une deuxième orientation tournée de 180° autour d'un axe de rotation vertical par rapport à la première orientation.

13. Dispositif de sciage selon l'une des revendications précédentes, **caractérisé en ce que** le chariot de transport (18) est supporté de façon déplaçable par le bâti de machine (12) au moyen d'un dispositif de guidage linéaire (80, 82), le dispositif de guidage linéaire (80, 82) comportant deux glissières profilées (106, 108) qui sont fixées au bâti de machine (12) à une même hauteur par rapport à la verticale.

14. Dispositif de sciage selon la revendication 13, **caractérisé en ce que** les glissières profilées (106, 108) sont fixées chacune à un profilé creux (56, 58) du bâti de machine (12), un côté supérieur orienté horizontalement des profilés creux (56, 58) formant au moins une zone partielle de la table de support (14).

15. Dispositif de sciage selon la revendication 14, **caractérisé en ce que** les glissières profilées (106, 108) sont fixées à un côté inférieur, orienté parallèlement au côté supérieur, du profilé creux (56, 58).
